Europäisches Patentamt

European Patent Office

Office européen des brevets

(11) **EP 1 130 367 B1**

(19)

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **G01F 1/84**

(21) Anmeldenummer: **00104198.7**

(22) Anmeldetag: **01.03.2000**

(54) **Coriolis-Massedurchfluss/Dichteaufnehmer mit einem einzigen gebogenen Messrohr**

Coriolis mass flow rate/density sensor with a single curved measuring tube

Capteur de débit massique et de densité selon Coriolis avec un seul tube courbé

(84) Benannte Vertragsstaaten:
**AT BE CH CY DE DK ES FI FR GB GR IE IT LI LU MC NL PT SE**

(43) Veröffentlichungstag der Anmeldung:
**05.09.2001 Patentblatt 2001/36**

(73) Patentinhaber: **Endress + Hauser Flowtec AG**
**CH-4153 Reinach BL 1 (CH)**

(72) Erfinder:
• **Drahm, Wolfgang**
 **85435 Erding (DE)**
• **Rieder, Alfred**
 **84030 Ergolding (DE)**
• **Wenger, Alfred**
 **8413 Neftenbach (CH)**
• **Lorenz, Reiner**
 **79540 Lörrach (DE)**

(74) Vertreter: **Andres, Angelika**
**Endress + Hauser (Deutschland) Holding GmbH,**
**PatServe,**
**Patent Abteilung,**
**Colmarer Strasse 6**
**79576 Weil am Rhein (DE)**

(56) Entgegenhaltungen:
**EP-A- 0 473 919      EP-A- 0 871 017**
**US-A- 5 602 344**

**Beschreibung**

Die Erfindung betrifft einen nach dem Coriolisprinzip arbeitenden Massedurchfluß/Dichteaufnehmer - im Folgenden als Coriolis-Massedurchfluß/Dichteaufnehmer bezeichnet - zur Messung des Massedurchflusses und/oder der Dichte eines Fluids, das mindestens temporär in einer Rohrleitung strömt; der Coriolis-Massedurchfluß/Dichteaufnehmer wird hierzu in die Rohrleitung eingesetzt und darin z.B. mittels Flanschen druckdicht befestigt.

In der WO-A 99/51946, insb. in Verbindung mit den Fig. 9 und 10, ist ein nach dem Coriolisprinzip arbeitender Massedurchflußaufnehmer beschrieben, der selbstverständlich auch ein Dichteaufnehmer ist und der in eine von einem Fluid mindestens temporär durchströmte, eine Rohrleitungsachse aufweisende Rohrleitung einzusetzen ist, mit einem einzigen in einer Ebene bezüglich einer Symmetrielinie gebogenen Meßrohr, das aufweist:

- ein gerades Einlaßstück mit einer in der Ebene liegenden Einlaßachse,
- ein gerades Auslaßstück mit einer in der Ebene liegenden und mit der Einlaßachse fluchtenden Auslaßachse,
- einen Einlaßbogen,
- einen Auslaßbogen,
- einen Scheitelbogen, wobei
- das Einlaßstück nahtlos mit dem Einlaßbogen und das Auslaßstück nahtlos mit dem Auslaßbogen verbunden ist,
- der Einlaßbogen in den Scheitelbogen und dieser in den Auslaßbogen nahtlos übergeht,

-- auf welches Einlaßstück zu einer ersten Begrenzung einer einen Rohrabschnitt des Meßrohrs bildenden Meßstrecke ein erster und ein zweiter Klemmkörper einander gegenüberliegend aufgespannt sind,
-- auf welches Auslaßstück zu einer zweiten Begrenzung der Meßstrecke ein dritter und ein vierter Klemmkörper einander gegenüberliegend aufgespannt sind,
-- wobei jeder Klemmkörper eine am Meßrohr anliegende Innenfläche und eine von dieser und dem Meßrohr abgewandte Außenfläche hat,

--- an welchem ersten und zweiten Klemmkörper ein einlaßseitiger erster Sensorträger fixiert ist, von dem eine Längsachse parallel zur Einlaßachse verläuft, und
--- an welchem dritten und vierten Klemmkörper ein auslaßseitiger zweiter Sensorträger fixiert ist, von dem eine Längsachse parallel zur Auslaßachse verläuft,

-- an welchem Scheitelbogen ein seismischer Erreger fixiert ist,

--- der den Rohrabschnitt zu Schwingungen eines dritten Schwingungsmodus mit einer zugehörigen Eigenfrequenz $f_3$ erregt, die bei mit dem Fluid gefülltem Rohrabschnitt etwa zwischen 500 Hz und 1000 Hz liegt, sowie

-- an welchem ersten Sensorträger und an welchem Einlaßbogen ein erster Geschwindigkeits- oder Wegsensor sowie an welchem zweiten Sensorträger und an welchem Auslaßbogen ein zweiter Geschwindigkeits- oder Wegsensor jeweils dort fixiert ist, wo bei Erregung im dritten Schwingungsmodus eine infolge einer aus der Rohrleitung stammenden Störung auftretende Verbiegung des Rohrabschnitts eine erste bzw. eine zweite Nullstelle hat.

Das Konstruktionsprinzip dieses vorbeschriebenen Coriolis-Massedurchflußaufnehmers läßt nur solche Scheitelbögen zu, die einen großen Krümmungsradius haben, oder anders ausgedrückt, bei denen der Abstand zwischen Scheitel und Einlaß/Auslaßachse nur etwa in der Größenordnung von 10 cm liegt. Für Abstände, die größer sind, insb. für Abstände, die um eine Größenordnung größer sind als die Größenordnung von 10 cm, ist das Konstruktionsprinzip der WO-A 99/51946 ungeeignet.

Eine Aufgabe der Erfindung besteht daher darin, ausgehend von dem vorbeschriebenen Konstruktionsprinzip, einen Coriolis-Massedurchfluß/Dichteaufnehmer anzugeben, bei dem der Abstand zwischen dem Scheitel des Scheitelbogens und der Einlaß/Auslaßachse praktisch beliebig groß sein kann. Zugleich sollen möglichst exakte Meßergebnisse, z.B. in der Größenordnung von 0,5% vom Meßwert, erreichbar sein.

Zur Lösung dieser Aufgaben besteht eine erste Variante der Erfindung in einem Coriolis-Massedurchfluß/Dichteaufnehmer, der in eine von einem Fluid mindestens temporär durchströmte, eine Rohrleitungsachse aufweisende Rohrleitung einzusetzen ist, mit einem einzigen in einer Ebene V-förmig bezüglich einer Symmetrielinie gebogenen Meßrohr, das aufweist:

- ein gerades Einlaßstück mit einer in der Ebene liegenden Einlaßachse,
- ein gerades Auslaßstück mit einer in der Ebene liegenden und mit der Einlaßachse fluchtenden Auslaßachse,
- einen Einlaßbogen,
- einen Auslaßbogen,
- einen Scheitelbogen, wobei
- das Einlaßstück nahtlos mit dem Einlaßbogen und das Auslaßstück nahtlos mit dem Auslaßbogen verbunden ist,
- ein gerades, den Einlaßbogen mit dem Scheitelbogen nahtlos verbindendes erstes Rohrstück und

- ein gerades, den Auslaßbogen mit dem Scheitelbogen nahtlos verbindendes zweites Rohrstück,

-- auf welches erste Rohrstück in der Nähe des Einlaßbogens zu einer ersten Begrenzung einer einen Rohrabschnitt des Meßrohrs bildenden Meßstrecke ein erster und ein zweiter Klemmkörper einander gegenüberliegend aufgespannt sind,

-- auf welches zweite Rohrstück in der Nähe des Auslaßbogens zu einer zweiten Begrenzung der Meßstrecke ein dritter und ein vierter Klemmkörper einander gegenüberliegend aufgespannt sind,

-- wobei jeder Klemmkörper eine am Meßrohr anliegende Innenfläche und eine von dieser und dem Meßrohr abgewandte Außenfläche hat,

--- an welchen Außenflächen des ersten und des dritten Klemmkörpers ein erster Flachkörper und

--- an welchen Außenflächen des zweiten und des vierten Klemmkörpers ein zweiter Flachkörper befestigt ist,

---- welche beiden Flachkörper unter Zwischenlage eines ersten Abstandssteges an einer ersten Längsseite und unter Zwischenlage eines zweiten Abstandssteges an einer zweiten Längsseite miteinander und mit den Klemmkörpern verschraubt sind,

---- an welchen beiden Flachkörpern ein Gegenschwingkörper fixiert ist, der sich entlang der Symmetrielinie bis zum Scheitelbogen erstreckt und dort einen ersten Teil einer eine Hauptachse aufweisenden Erregeranordnung trägt, von der ein zweiter Teil am Scheitelbogen fixiert ist,

---- welche Erregeranordnung den Rohrabschnitt zu Schwingungen eines dritten Schwingungsmodus mit einer zugehörigen Eigenfrequenz $f_3$ erregt,

---- auf welchem ersten Flachkörper ein einlaßseitiger erster Sensorträger, von dem eine Längsachse parallel zum ersten Rohrstück verläuft, und ein auslaßseitiger zweiter Sensorträger fixiert ist, von dem eine Längsachse parallel zum zweiten Rohrstück verläuft, und

---- auf welchem zweiten Flachkörper ein einlaßseitiger erster Fixierträger, von dem eine Längsachse parallel zum ersten Sensorträger verläuft, und ein auslaßseitiger zweiter Fixierträger befestigt ist, von dem eine Längsachse parallel zum zweiten Sensorträger verläuft,

-- an welchem ersten Rohrstück und an welchem ersten Sensorträger ein erster Geschwindigkeits- oder Wegsensor sowie an welchem zweiten Rohrstück und an welchem zweiten Sensorträger ein zweiter Geschwindigkeits- oder Wegsensor jeweils dort fixiert. ist, wo bei Erregung im dritten Schwingungsmodus eine infolge einer aus der Rohrleitung stammenden Störung auftretende Verbiegung des Rohrabschnitts eine erste bzw. eine zweite Nullstelle hat, und

-- welches Einlaßstück und welches Auslaßstück von einem Tragrahmen gehaltert sind,

--- an dem ein Gehäuse fixiert ist, das am jeweiligen Fixierträger mittels eines ersten bzw. eines zweiten, dem ersten bzw. dem zweiten Geschwindigkeits- oder Wegsensor gegenüber liegenden Abstandhalters fixiert ist.

Zur Lösung der erwähnten Aufgaben besteht eine zweite Variante der Erfindung in einem Coriolis-Massedurchfluß/Dichteaufnehmer, der in eine von einem Fluid mindestens temporär durchströmte, eine Rohrleitungsachse aufweisende Rohrleitung einzusetzen ist, mit einem einzigen in einer Ebene V-förmig bezüglich einer Symmetrielinie gebogenen Meßrohr, das aufweist:

- ein gerades Einlaßstück mit einer in der Ebene liegenden Einlaßachse,
- ein gerades Auslaßstück mit einer in der Ebene liegenden und mit der Einlaßachse fluchtenden Auslaßachse,
- einen Einlaßbogen,
- einen Auslaßbogen,
- einen Scheitelbogen, wobei
- das Einlaßstück nahtlos mit dem Einlaßbogen und das Auslaßstück nahtlos mit dem Auslaßbogen verbunden ist,
- ein gerades, den Einlaßbogen mit dem Scheitelbogen nahtlos verbindendes erstes Rohrstück und
- ein gerades, den Auslaßbogen mit dem Scheitelbogen nahtlos verbindendes zweites Rohrstück,

-- auf welches erste Rohrstück in der Nähe des Einlaßbogens zu einer ersten Begrenzung einer einen Rohrabschnitt des Meßrohrs bildenden Meßstrecke ein erster und ein zweiter Klemmkörper einander gegenüberliegend aufgespannt sind,

-- auf welches zweite Rohrstück in der Nähe des Auslaßbogens zu einer zweiten Begrenzung der Meßstrecke ein dritter und ein vierter Klemmkörper einander gegenüberliegend aufgespannt sind,

-- wobei jeder Klemmkörper eine am Meßrohr anliegende Innenfläche und eine von dieser und dem Meßrohr abgewandte Außenfläche hat,

--- an welchen Außenflächen des ersten und des dritten Klemmkörpers ein erster Flachkörper und

--- an welchen Außenflächen des zweiten und des vierten Klemmkörpers ein zweiter Flachkörper befestigt ist,

---- welche beiden Flachkörper unter Zwischenlage eines ersten Abstandssteges an einer ersten Längsseite und unter Zwischenlage eines zweiten Abstandssteges an einer zweiten Längsseite miteinander und mit den Klemmkörpern verschraubt sind,

---- an welchen beiden Flachkörpern ein Gegenschwingkörper fixiert ist, der sich entlang der Symmetrielinie in Richtung auf den Scheitelbogen erstreckt und davor endet,

---- auf welchem ersten Flachkörper ein einlaßseitiger erster Sensorträger, von dem eine Längsachse parallel zum ersten Rohrstück verläuft, und ein auslaßseitiger zweiter Sensorträger fixiert ist, von dem eine Längsachse parallel zum zweiten Rohrstück verläuft, und

---- auf welchem zweiten Flachkörper ein einlaßseitiger erster Fixierträger, von dem eine Längsachse parallel zum ersten Sensorträger verläuft, und ein auslaßseitiger zweiter Fixierträger befestigt ist, von dem eine Längsachse parallel zum zweiten Sensorträger verläuft,

-- an welchem Scheitelbogen ein seismischer Erreger fixiert ist,

--- der den Rohrabschnitt zu Schwingungen eines dritten Schwingungsmodus mit einer Zugehörigen Eigenfrequenz $f_3$ erregt,

-- an welchem ersten Rohrstück und an welchem ersten Sensorträger ein erster Geschwindigkeits- oder Wegsensor sowie an welchem zweiten Rohrstück und an welchem zweiten Sensorträger ein zweiter Geschwindigkeits- oder Wegsensor jeweils dort fixiert ist, wo bei Erregung im dritten Schwingungsmodus eine infolge einer aus der Rohrleitung stammenden Störung auftretende Verbiegung des Rohrabschnitts eine erste bzw. eine zweite Nullstelle hat, und

-- welches Einlaßstück und welches Auslaßstück von einem Tragrahmen gehalten sind,

--- an dem ein Gehäuse fixiert ist, das am jeweiligen Fixierträger mittels eines ersten bzw. eines zweiten, dem ersten bzw. dem zweiten Geschwindigkeits- oder Wegsensor gegenüber liegenden Abstandhalters fixiert ist.

Nach einer ersten bevorzugten Weiterbildung der beiden Varianten der Erfindung ist auf dem ersten Rohrstück in der Nähe des Scheitelbogens und etwa dort, wo ein Schwingungsknoten des dritten Schwingungsmodus auftritt, eine erste Zusatzmasse und symmetrisch zur Symmetrielinie auf dem zweiten Rohrstück eine zweite Zusatzmasse fixiert.

Nach einer ersten bevorzugten Ausgestaltung der Erfindung und/oder deren erster Weiterbildung ist die Erregeranordnung am Scheitelbogen und am Gegenschwingkörper so fixiert ist, dass eine Hauptachse der Erregeranordnung in Richtung eines Durchmessers des Scheitelbogens verläuft.

Nach einer zweiten bevorzugten Ausgestaltung der Erfindung und/oder deren erster Weiterbildung ist die Erregeranordnung am Scheitelbogen und am Gegenschwingkörper so fixiert, dass eine Hauptachse der Erregeranordnung parallel zu einem Durchmesser des Scheitelbogens verläuft und zwischen diesem und dem Gehäuse liegt.

Nach einer zweiten bevorzugten Weiterbildung der beiden Varianten der Erfindung, deren erster Weiterbildung und deren Ausgestaltungen ist auf dem Gegenschwingkörper in der Nähe der Flachkörper ein Kompensationskörper fixiert, von dem eine Längsachse senkrecht zur Symmetrielinie verläuft und der der dynamischen Ausbalancierung eines zum dritten Schwingungsmodus gehörenden Coriolismodus dient.

Nach einer dritten bevorzugten Weiterbildung der beiden Varianten der Erfindung sowie deren Weiterbildungen und Ausgestaltungen sind die beiden Flachkörper und der erste Abstandssteg entlang der Symmetrielinie mit einer ersten Ausnehmung und die beiden Flachkörper und der zweite Abstandssteg entlang der Symmetrielinie mit einer zweiten Ausnehmung unter Stehenlassen eines jeweiligen Torsionsstücks versehen.

Nach einer bevorzugten Ausgestaltung der dritten Weiterbildung der Erfindung sind die Torsionsstücke als gemeinsames Drehgelenk ausgebildet.

Nach einer bevorzugten Ausgestaltung der beiden Varianten der Erfindung sowie deren Weiterbildungen und Ausgestaltungen haben der erste, der zweite, der dritte und der vierte Klemmkörper die gleiche Masse.

Nach einer anderen bevorzugten Ausgestaltung der beiden Varianten der Erfindung sowie deren Weiterbildungen und Ausgestaltungen ist das Gehäuse aus ebenen Blechen zusammengesetzt und umfaßt:

- ein Vorderblech mit einer ersten Mittelebene,
- ein Hinterblech mit einer zweiten Mittelebene,
- ein Scheitelblech mit einer dritten Mittelebene,
- ein erstes Seitenblech mit einer vierten Mittelebene und
- ein zweites Seitenblech mit einer fünften Mittelebene, wobei

  -- die erste Mittelebene parallel zum ersten Rohrstück liegt,
  -- die zweite Mittelebene parallel zum zweiten Rohrstück liegt,
  -- die dritte Mittelebene senkrecht zur Ebene ist,
  -- die vierte und die fünfte Mittelebene parallel zu den Flachkörpern liegen und
  -- das Hinterblech über die Abstandshalter an den Fixierträgern befestigt ist.

Ein Vorteil der Erfindung besteht darin, dass sie Coriolis-Massedurchfluß/Dichteaufnehmer ermöglicht, deren Baulänge, also die Länge entlang der Einlaß/Auslaßachse, im Vergleich zu der Baulänge der vorschriebenen Anordnung nach der WO-A 99/51946, wesentlich kürzer ist. Dies ist u.a. auf die V-Form des Meßrohrs zurückzuführen. Insgesamt ergibt sich daher ein Kompaktaufnehmer mit der gewünschten Meßgenauigkeit.

Ein weiterer Vorteil ergibt sich, weil ein Effekt nicht auftritt, der bei der vorbeschriebenen Anordnung möglich ist. Dieser Effekt besteht darin, dass das Meßrohr von aus der Rohrleitung stammenden Vibrationen wegen der mechanisch nur über das Meßrohr miteinander verbundenen, sonst jedoch von einander unabhängigen Klemmkörper zu mechanischen Schwingungen angeregt werden kann, die eine niedrigere Frequenz als die Frequenz des dritten Schwingungsmodus haben. Diese niederfrequenten Schwingungen werden ebenso wie die Schwingungen des dritten Schwingungsmodus von den Sensoren in elektrische Signale umgewandelt und sind darin als Störsignale enthalten. Bei der Anordnung der Erfindung sind jedoch die Klemmkörper der Einlaßseite mit denen der Auslaßseite u.a. mittels der Flachkörper weitestgehend starr verbunden, so dass die Erregung der niederfrequenten Schwingungen praktisch unterbunden ist.

Die Erfindung wird nun anhand der Figuren der Zeichnung näher erläutert, in der Ausführungsbeispiele dargestellt sind. Funktionsgleiche Teile sind in unterschiedlichen Figuren mit denselben Bezugszeichen versehen, jedoch in nachfolgenden Figuren nur dann wiederholt, wenn es sinnvoll erscheint.

Fig. 1     zeigt teilweise geschnitten eine Längsansicht eines Coriolis-Massedurchfluß/Dichteaufnehmers nach der ersten Variante der Erfindung,

Fig. 2     zeigt eine teilweise geschnittene Seitenansicht entlang der Linie I-I von Fig. 1,

Fig. 3     zeigt teilweise geschnitten eine weitere Längsansicht des Coriolis-Massedurchfluß/Dichteaufnehmers von Fig. 1, wobei einige Teile von Fig. 1 nicht dargestellt sind,

Fig. 4     zeigt teilweise geschnitten eine Längsansicht eines Coriolis-Massedurchfluß/Dichteaufnehmers nach der zweiten Variante der Erfindung,

Fig. 5     zeigt eine teilweise geschnittene Seitenansicht entlang der Linie II-II von Fig. 4, und

Fig. 6     zeigt in mit Fig. 3 vergleichbarer Weise und teilweise geschnitten eine Längsansicht einer bevorzugten Weiterbildung der beiden Varianten der Erfindung.

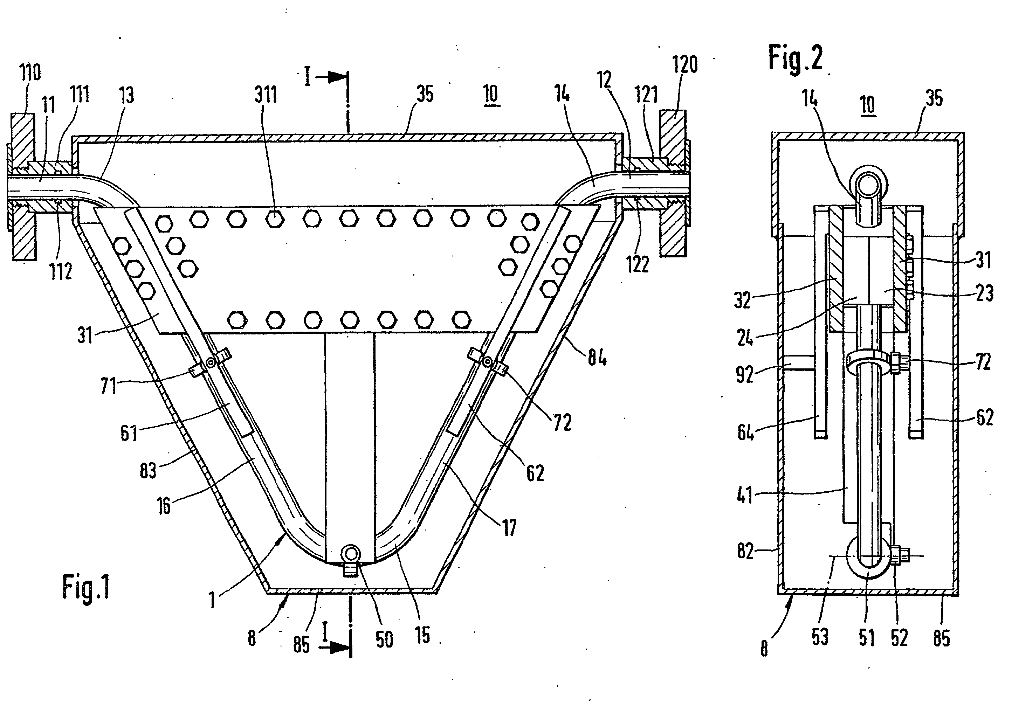

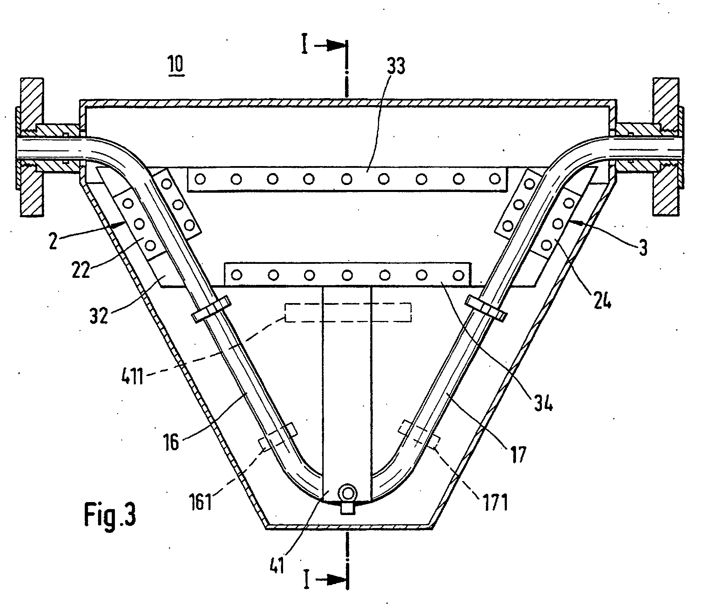

In den Fig. 1 und 3 ist jeweils in teilweise geschnittener Längsansicht ein Ausführungsbeispiel eines Coriolis-Massedurchfluß/Dichteaufnehmers 10 nach der ersten Variante der Erfindung dargestellt. In Fig. 1 sind Teile des unten erwähnten Gehäuses weggelassen, so dass der Innenaufbau des Coriolis-Massedurchfluß/Dichteaufnehmers 10 sichtbar ist. In Fig. 3 sind von diesem Innenaufbau der Fig. 1 einige Komponenten weggelassen, so dass von diesen in Fig. 1 verdeckte Komponenten sichtbar sind. Zur Fig. 1 gehört die teilweise geschnittene Seitenansicht der Fig. 2, wobei der Schnitt entlang der Linie I-I von Fig. 1 erfolgt ist. Die Fig. 1 bis 3 werden im Folgenden gemeinsam erläutert und sind auch gemeinsam zu betrachten.

Der Coriolis-Massedurchfluß/Dichteaufnehmer 10 umfasst ein einziges Meßrohr 1, das in einer Ebene - das ist in Fig. 1 die Zeichenebene - V-förmig bezüglich einer Symmetrielinie I-I gebogen ist, die zugleich Schnittlinie für die Fig. 2 ist. Das Meßrohr 1 weist ein gerades Einlaßstück 11 auf, das eine in der Ebene liegende Einlaßachse hat. Ferner weist das Meßrohr 1 ein gerades Auslaßstück 12 auf, das eine in der Ebene liegende und mit der Einlaßachse fluchtende Auslaßachse hat. Somit kann der Coriolis-Massedurchfluß/Dichteaufnehmer 10 in eine gerade Rohrleitung eingesetzt werden.

Das Meßrohr 1 hat ferner einen Einlaßbogen 13, einen Auslaßbogen 14 und einen Scheitelbogen 15, wobei das Einlaßstück 11 nahtlos mit dem Einlaßbogen 13 und das Auslaßstück 12 nahtlos mit dem Auslaßbogen 14 verbunden ist.

Das Meßrohr 1 weist schließlich ein gerades erstes Rohrstück 16 und ein gerades zweites Rohrstück 17 auf. Das Rohrstück 16 verbindet nahtlos den Einlaßbogen 13 mit dem Scheitelbogen 15 und das Rohrstück 17 nahtlos den Scheitelbogen 15 mit dem Auslaßbogen 14, so dass das Meßrohr 1 aus einem einzigen Stück besteht und in einer geeigneten Biegevorrichtung aus einem geraden Rohrstück gebogen werden kann. Da das Meßrohr 1 V-förmig gebogen, also nicht gerade, ist, kann es insb. aus einem Stahl, bevorzugt aus einem Edelstahl hergestellt werden.

In den Ausführungsbeispielen mündet das Einlaßstück 11 in einem ersten Flansch 110 und das Auslaßstück 12 in einem zweiten Flansch 120. Wie eingangs bereits erwähnt wurde, wird der Coriolis-Massedurchfluß/Dichteaufnehmers 10 mittels der Flansche 110, 120 in die Rohrleitung eingesetzt und darin druckdicht befestigt.

In einer Innenfläche des Flansches 110 mündet eine Hülse 111, die das Einlaßstück 11 umgibt, zu dessen Verstärkung dient und z.B. auf es aufgepresst wird, wobei ein Dichtungsring 112 zwischen Einlaßstück 11 und Hülse 111 eingelegt ist.

In vergleichbarer Weise mündet in einer Innenfläche des Flansches 120 eine Hülse 121, die das Auslaßstück 12 umgibt, zu dessen Verstärkung dient und z. B. auf es aufgepresst wird, wobei ein Dichtungsring 122 zwischen Auslaßstück 12 und Hülse 121 eingelegt ist.

Auf das Rohrstück 16 sind in der Nähe des Einlaßbogens 13 ein erster und ein zweiter Klemmkörper einander gegenüber liegend aufgespannt; in Fig. 2 sind diese, da verdeckt, nicht, in Fig 3. dagegen nur der zweite Klemmkörper 22 zu sehen. Diese beiden Klemmkörper bilden ein erstes Klemmkörperpaar 2 und schaffen eine erste Begrenzung einer einen Rohrabschnitt des Meßrohrs 1 bildenden Meßstrecke.

Auf das Rohrstück 17 sind in der Nähe des Auslaßbogens 14 ein dritter und ein vierter Klemmkörper 23, 24 einander gegenüber liegend aufgespannt; in Fig. 2 sind beide Klemmkörper 23, 24, in Fig 3. dagegen nur der vierte Klemmkörper 24 zu sehen. Diese beiden Klemmkörper bilden ein zweites Klemmkörperpaar 3 und schaffen eine zweite Begrenzung der den Rohrabschnitt des Meßrohrs 1 bildenden Meßstrecke. Die vier Klemmkörper haben bevorzugt die gleiche Masse.

Die Meßstrecke verläuft in Fig. 3 somit vom unteren Rand des Klemmkörperpaars 2 bis zum unteren Rand des Klemmkörperpaars 3; diese Paare begrenzen denjenigen Rohrabschnitt, der im Betrieb in Schwingungen versetzt wird und auf den bei strömendem Fluid Corioliskräfte einwirken.

Jeder Klemmkörper hat eine am Meßrohr 1 anliegende Innenfläche, die der Form der Außenwand des Meßrohrs 1 angepasst sein kann, und eine von dieser und dem Meßrohr 1 abgewandte, bevorzugt ebene, Außenfläche. An den Außenflächen des ersten und des dritten Klemmkörpers 23 ist ein erster Flachkörper 31 und an den Außenflächen des zweiten und des vierten Klemmkörpers 22, 24 ein zweiter Flachkörper 32 befestigt.

Die beiden Flachkörper 31, 32 sind unter Zwischenlage eines ersten Abstandssteges 33 an einer ersten Längsseite und unter Zwischenlage eines zweiten Abstandssteges 34 an einer zweiten Längsseite miteinander und mit den Klemmkörpern verschraubt. Hierzu dienen die in den Figuren dargestellten Schrauben, von denen eine das Bezugszeichen 311 trägt.

Die Dicke der Abstandsstege 33, 34 und die Dicke der Klemmkörperpaare 2, 3 mit dazwischen eingeklemmtem Meßrohr 1 sind so aufeinander abgestimmt, dass die beiden Flachkörper praktisch verwindungsfrei miteinander verschraubt sind. Ferner ist die Dicke der Klemmkörper jedes Klemmkörperpaars 2, 3 so auf den Außendurchmesser des Meßrohrs 1 abgestimmt, dass die zugehörigen Klemmkörper das Meßrohr 1 im zusammengeschraubten Zustand fest einspannen und deren Innenflächen gut aneinander anliegen.

Ein Gegenschwingkörper 41 ist an den beiden Flachkörpern 31, 32 fixiert, der sich entlang der Symmetrielinie I-I und bevorzugt symmetrisch zu ihr bis zum Scheitelbogen 15 erstreckt und dort einen ersten Teil 51 einer eine Hauptachse 53 aufweisenden Erregeranordnung 50 trägt, von der ein zweiter Teil 52 am Scheitelbogen 15 fixiert ist. Der Teil 51 ist z.B. ein Dauermagnet bzw. eine Spule und der Teil 52 eine Spule bzw. ein Dauermagnet einer elektrodynamischen Erregeranordnung.

Bei einer bevorzugten Ausgestaltung der ersten Variante der Erfindung ist, wie dies in den Fig. 1 bis 3 dargestellt ist, die Erregeranordnung 50 am Scheitelbogen 15 und am Gegenschwingkörper 41 so fixiert, dass deren Hauptachse 53 in Richtung eines Durchmessers des Scheitelbogens 15 verläuft.

Bei einer anderen bevorzugten Ausgestaltung der ersten Variante der Erfindung ist, wie dies in den Fig. 1 bis 3 aus Übersichtlichkeitsgründen nicht dargestellt ist, die Erregeranordnung am Scheitelbogen und am Gegenschwingkörper so fixiert, dass deren Hauptachse parallel zu einem Durchmesser des Scheitelbogens verläuft und zwischen diesem und dem Gehäuse (siehe unten) liegt. Dadurch lässt sich der Wirkungsgrad der Erregeranordnung verbessern; so ergibt sich z.B. eine Verbesserung um ca. 25%, wenn die Hauptachse der Erregeranordnung um etwa einen Durchmesser des Meßrohrs gegenüber der in Fig. 1 bis 3 dargestellten Lage versetzt ist.

Die Erregeranordnung 50 erregt den Rohrabschnitt und damit die Meßstrecke zu Schwingungen eines dritten Schwingungsmodus mit einer zugehörigen Eigenfrequenz $f_3$. Bei mit dem Fluid gefülltem Rohrabschnitt liegt üblicherweise etwa zwischen 500 Hz und 1000 Hz.

Der dritte Schwingungsmodus ist diejenige Schwingung des Rohrabschnitts, bei der zwischen den Klemmkörperpaaren 2, 3 gleichzeitig lediglich zwei Schwingungsknoten und drei Schwingungsbäuche, davon einer am Scheitelbogen 15, auftreten; der dritte Schwingungsmodus hat die zugehörige Eigenfrequenz $f_3$ und ist mit dem zweiten Oberton einer schwingenden Saite vergleichbar.

Demgegenüber ist der zweite Schwingungsmodus diejenige Schwingung des Rohrabschnitts, bei der zwischen den Klemmkörperpaaren 2, 3 gleichzeitig nur ein einziger Schwingungsknoten, und zwar am Scheitelbogen 15, und zwei Schwingungsbäuche auftreten. Der zweite Schwingungsmodus hat eine Eigenfrequenz $f_2$ und ist mit dem ersten Oberton einer Saite vergleichbar.

Die Eigenfrequenz $f_3$ des dritten Schwingungsmodus hat bei der Erfindung etwa den fünffachen Wert der Frequenz des ersten Schwingungsmodus, der der Grund-Schwingungsmodus mit einer Eigenfrequenz $f_1$ ist. Dieser hat einen einzigen Schwingungsbauch am Scheitelbogen 15 und keinen Schwingungsknoten zwischen den Klemmkörperpaaren 2, 3.

Zusätzlich zum erfindungsgemäß auf seiner Eigenfrequenz $f_3$ erregten dritten Schwingungsmodus treten im Falle eines strömendem Fluids der erwähnte zweite Schwingungsmodus und auch ein entsprechender vierter Schwingungsmodus mit einer Eigenfrequenz $f_4$ auf; diese beiden Modi können als Coriolismodi bezeichnet werden. Für die Eigenfrequenzen $f_2$, $f_4$ gelten bei der Erfindung angenähert die folgenden Zahlenwerte:

$$f_2 \approx 0{,}6\, f_3; \qquad f_4 \approx 1{,}7\, f_3$$

Signale mit den beiden Eigenfrequenzen $f_2$, $f_4$ können zwar mittels der unten noch näher erläuterten Sensoren nicht einzeln aufgenommen werden, da diese Sensoren Sensorsignale erzeugen, die allein die Eigenfrequenz $f_3$ des erwähnten dritten Schwingungsmodus haben, in dem das Meßrohr 1 allein schwingt; die beiden Coriolismodi sind aber für eine bei strömendem Fluid auftretende und ein Maß für den Massedurchfluss darstellende Phasenverschiebung zwischen den Sensorsignalen verantwortlich.

Zur Ausbalancierung des dritten Schwingungsmodus des Meßrohrs 1 dient der Gegenschwingkörper 41; diese beiden Komponenten schwingen also praktisch gleichfrequent miteinander, jedoch gegenphasig zueinander.

Auf dem Flachkörper 31 ist ein einlaßseitiger erster Sensorträger 61, von dem eine Längsachse parallel zum Rohrstück 16 verläuft, und ein auslaßseitiger zweiter Sensorträger 62 fixiert, von dem eine Längsachse parallel zum Rohrstück 17 verläuft.

Auf dem Flachkörper 32 ist ein einlaßseitiger erster Fixierträger, von dem eine Längsachse parallel zum Sensorträger 61 verläuft, und ein auslaßseitiger zweiter Fixierträger 64 befestigt, von dem eine Längsachse parallel zum Sensorträger 62 verläuft. Der erste Fixierträger ist in den Fig. 1 bis 3, da verdeckt, nicht darstellbar, liegt jedoch spiegelsymmetrisch zur Symmetrieachse I-I und kann daher aufgrund des Fixierträgers 64 sehr einfach hinzugedacht werden.

Am Rohrstück 16 und am Sensorträger 61 ist ein erster Geschwindigkeits- oder Wegsensor 71 sowie am Rohrstück 17 und am Sensorträger 62 ein zweiter Geschwindigkeits- oder Wegsensor 72 jeweils dort fixiert, wo bei Erregung im dritten Schwingungsmodus eine infolge einer aus der Rohrleitung stammenden Störung auftretende Verbiegung des Rohrabschnitts eine erste bzw. eine zweite Nullstelle hat.

Die Lage dieser Nullstellen auf den Rohrstücken 16, 17 läßt sich empirisch leicht ermitteln: Die Nullstellen liegen, da die Erregeranordnung 50 im Scheitel des Scheitelbogens 15 und somit in der Mitte der Meßstrecke fixiert ist, in gleichem Abstand von den Klemmkörperpaaren 2, 3; bei einem homogenen Meßrohr ist dieser Abstand etwa gleich dem 0,21-Fachen der Länge der Meßstrecke. Der jeweilige Ort der Nullstellen ist nicht mit dem jeweiligen Ort der Schwingungsknoten des dritten Schwingungsmodus korreliert, d.h. diese Örter sind unabhängig voneinander.

Die Sensoren 71, 72 sind Geschwindigkeits- oder Wegsensoren. Ein Geschwindigkeitssensor erzeugt ein sinusförmiges Sensorsignal, dessen Phasenverschiebung zu der von der Erregeranordnung 50 bewirkten sinusförmigen Bewegung der Meßstrecke gleich 90° ist. Ein Wegsensor erzeugt dagegen ein sinusförmiges Sensorsignal, dessen Phasenverschiebung zu der von der Erregeranordnung 50 bewirkten sinusförmigen Bewegung der Meßstrecke gleich null ist.

Das Einlaßstück 11 und das Auslaßstück 12 sind von einem Tragrahmen 35 gehaltert; in den Ausführungsbeispielen geschieht dies ausschließlich über die Hülsen 111, 121, die mit dem Tragrahmen 35 verschweißt oder hartverlötet sind, d.h. der Tragrahmen 35 berührt das Einlaßstück 11 und das Auslaßstück 12 nicht.

Am Tragrahmen 35 ist ein Gehäuse 8, z.B. durch Schweißen oder durch Hartlöten, fixiert, das am ersten Fixierträger mittels eines ersten, dem ersten Geschwindigkeits- oder Wegsensor 71 gegenüberliegenden ersten Abstandhalters fixiert ist. Das Gehäuse 8 ist ferner mit dem Fixierträger 64 mittels eines zweiten, dem zweiten Geschwindigkeitsoder Wegsensor 72 gegenüberliegenden Abstandhalters 92 fixiert.

Der erste Abstandhalter ist in den Fig. 1 bis 3, da verdeckt, wiederum nicht darstellbar, liegt jedoch spiegelsymmetrisch zur Symmetrieachse I-I und kann daher aufgrund des Abstandhalters 92 sehr einfach hinzugedacht werden.

Das Gehäuse 8 ist nach einer bevorzugten Ausgestaltung der Erfindung aus ebenen Blechen zusammengesetzt, die insb. miteinander verschweißt oder hartverlötet sind. Das Gehäuse 8 umfasst ein Vorderblech 81 mit einer ersten Mittelebene, ein Hinterblech 82 mit einer zweiten Mittelebene, ein Scheitelblech 83 mit einer dritten Mittelebene, ein erstes Seitenblech 84 mit einer vierten Mittelebene und ein zweites Seitenblech 85 mit einer fünften Mittelebene.

Die erste Mittelebene liegt parallel zum Rohrstück 16 und die zweite Mittelebene parallel zum Rohrstück 17. Die dritte Mittelebene verläuft senkrecht zur oben genannten Ebene, in der das Meßrohr 1 gebogen ist. Die vierte und die fünfte Mittelebene liegen parallel zu den Flachkörpern 31, 32, und das Hinterblech 82 ist über die Abstandshalter an den Fixierträgern befestigt.

In die Fig. 3 ist noch eine bevorzugte Weiterbildung der ersten Variante der Erfindung gestrichelt eingezeichnet. Auf dem ersten Rohrstück 16 ist in der Nähe des Scheitelbogens 15 und etwa an einer Stelle, wo im Betrieb ein Schwingungsknoten des dritten Schwingungsmodus auftritt, eine erste Zusatzmasse 161 und symmetrisch zur Symmetrielinie I-I auf dem zweiten Rohrstück 17 eine zweite Zusatzmasse 171 fixiert. Die erwähnten Stellen der Schwingungsknoten lassen sich empirisch oder rechnerisch leicht ermitteln, wobei es nicht auf eine exakte Plazierung der Zusatzmassen ankommt.

Durch die Zusatzmassen 161, 171 wird die Lage der erwähnten Schwingungsknoten gegenüber einer Anordnung ohne Zusatzmassen entlang dem Meßrohr 1 leicht verschoben. Mit den Zusatzmassen 161, 171 lässt sich eine wesentliche Erhöhung des Wirkungsgrads der Erregeranordnung 50 gegenüber der zusatzmassenlosen Anordnung erreichen. Wie Messunngen ergeben haben, kann diese Erhöhung bis zu 50% betragen.

Der Wirkungsgrad der Erregeranordnung lässt sich weiter erhöhen, wenn zusätzlich zu den Zusatzmassen 161, 171 auch noch die oben erwähnte bevorzugte Ausgestaltung der Erregeranordnung angewandt wird, bei der diese am Scheitelbogen und am Gegenschwingkörper so fixiert ist, dass deren Hauptachse parallel zu einem Durchmesser des Scheitelbogens verläuft.

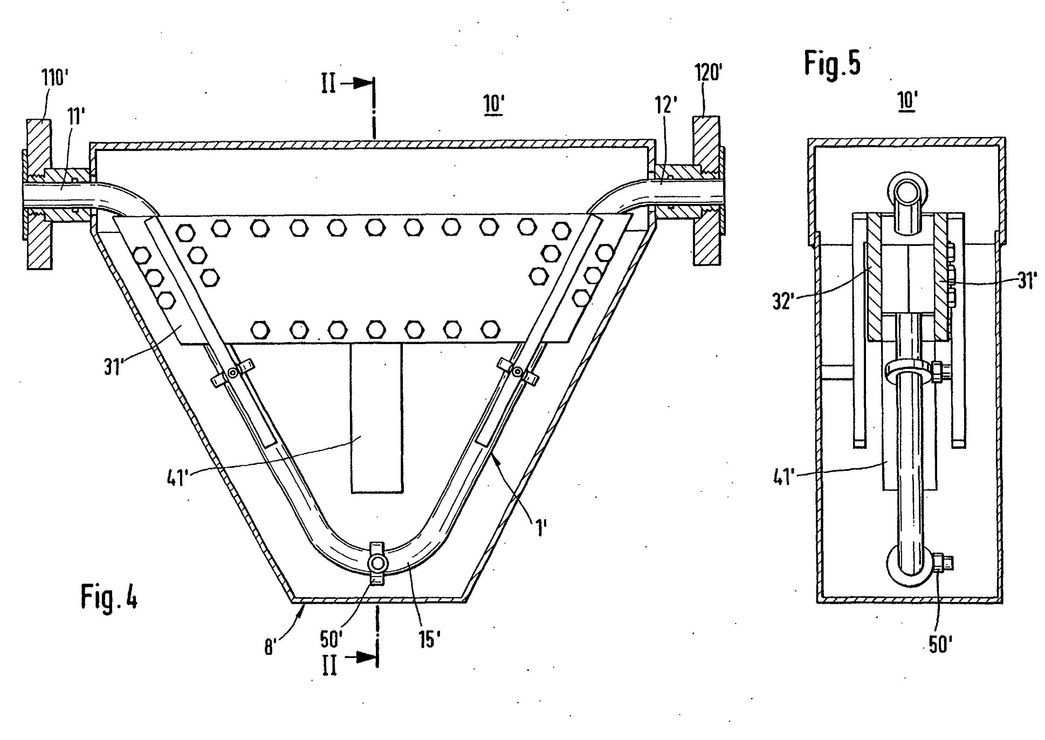

In Fig. 4 ist teilweise geschnitten eine Längsansicht eines Coriolis-Massedurchfluß/Dichteaufnehmers 10' nach der zweiten Variante der Erfindung und in Fig. 5 eine teilweise geschnittene Seitenansicht entlang der Linie II-II von Fig. 4 dargestellt. Hinsichtlich der Sichtbarkeit der Komponenten entsprechen die Fig. 4 und 5 den Fig. 1 und 2. In den Fig. 4 und 5 haben Komponenten, die denen der Fig. 1 bis 3 entsprechen, der Zahl nach deren Bezugszeichen, die allerdings mit einem Apostroph versehen sind.

Die zweite Variante der Erfindung unterscheidet sich von der ersten Variante einerseits dadurch, dass der Gegenschwingkörper 41' nicht bis zum Scheitelbogen 15' geführt ist, sondern davor endet. Es ist somit nicht möglich, einen Teil der Erregeranordnung 50 von Fig. 1 bis 3 am Gegenschwingkörper 41' zu befestigen.

Daher wird bei der zweiten Variante der Erfindung andererseits anstatt der Erregeranordnung 50 der Fig. 1 bis 3 ein seismischer Erreger 50' eingesetzt, wie er in der eingangs referierten WO-A 99/51946 ausführlich beschrieben ist.

Die über die Fixierstelle an den Flachkörpern 31, 32 in den Fig. 1 bis 3 bzw. an den entsprechenden Flachkörpern 31', 32' in den Fig. 4 und 5 überstehende Länge, die räumliche Form und die Masse des Gegenschwingkörpers 41 bzw. 41' hängt insgesamt von den Abmessungen des Coriolis-Massedurchfluß/Dichteaufnehmers 10 bzw. 10' ab, insb. von der vorgesehenen Nennweite des Meßrohrs 1 bzw. 1', von dessen Wandstärke und damit von dessen Masse sowie von der Masse der Klemmkörper, Abstandsstege und Flachkörper.

Die Länge, die räumliche Form und die Masse des Gegenschwingkörpers 41 bzw. 41' werden für jede Nennweite, mit der Coriolis-Massedurchfluß/Dichteaufnehmer 10 bzw. 10' hergestellt werden sollen, aufgrund des Kriteriums ermittelt, dass im Betrieb, also mit schwingendem Meßrohr 1 bzw. 1', am Einlaßstück 11 bzw. 11' und/oder am Flansch 110 bzw. 110' und am Auslaßstück 12 bzw. 12' und/oder am Flansch 120 bzw. 120' möglichst keine Vibrationen auftreten.

Diese Freiheit von Vibrationen läßt sich z.B. empirisch dadurch ermitteln, dass im jeweiligen Flanschbereich Beschleunigungssensoren angebracht werden. Eleganter ist allerdings die Dimensionierung des Gegenschwingkörpers 41 bzw. 41' mittels eines Finite-Elemente-Rechenprogramms.

In die Fig. 3 ist ferner noch eine weitere bevorzugte Weiterbildung gestrichelt eingezeichnet, die bei beiden Varianten der Erfindung angewandt werden kann. Auf dem Gegenschwingkörper 41 ist in der Nähe der Flachkörper 31, 32 ein Kompensationskörper 411 fixiert. Senkrecht zur Symmetrielinie I-I verläuft eine Längsachse des Kompensationskörpers 411, Dieser dient der dynamischen Ausbalancierung des erwähnten, zum dritten Schwingungsmodus gehörenden Coriolismodus der Frequenz $f_C$ und schwingt bei dieser Frequenz gegenphasig zum Gegenschwingkörper 41. Die Abmessungen, die räumliche Form und die Masse des Kompensationskörpers 411 lassen sich wieder empirisch oder mittels eines Finite-Elemente-Rechenprogramms ermitteln.

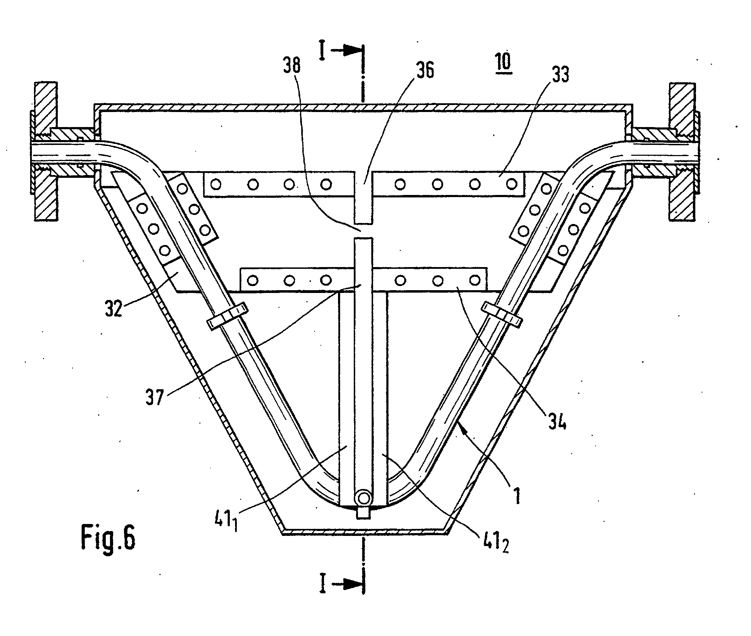

In Fig. 6 ist in mit Fig. 3 vergleichbarer Weise und teilweise geschnitten eine Längsansicht einer bevorzugten Weiterbildung der beiden Varianten der Erfindung dargestellt. Die beiden Flachkörper, von denen in Fig. 6 wieder nur der Flachkörper 32 zu sehen ist, und der Abstandssteg 33 sind entlang der Symmetrielinie I-I mit. einer ersten Ausnehmung 36 versehen.

Ferner sind die beiden Flachkörper, der Abstandssteg 34 und der Gegenschwingkörper entlang der Symmetrielinie I-I mit einer zweiten Ausnehmung 37 versehen. Die Ausnehmungen 36, 37 laufen nur soweit auf einnander zu, dass in jedem Flachkörper ein Torsionsstück stehen bleibt, von denen in Fig. 6 das Torsionsstück 38 zu sehen ist. Bevorzugt sind die beiden Torsionsstücke als Drehgelenk ausgebildet. Infolge der sich vollständig auch in den Gegenschwingkörper erstreckenden Ausnehmung 37 ist dieser in zwei Teile $41_1$, $41_2$ geteilt.

Die Weiterbildung von Fig. 6 dient wieder der bereits erläuterten dynamischen Ausbalancierung des Coriolismodus, da die Torsionsstücke ermöglichen, dass die in Fig. 6 linken Teile der Flachkörper sich gegenüber deren rechten Teilen bezüglich der Zeichenebene gegenphasig zum Coriolismodus des Meßrohrs 1 vor- und zurückbewegen können.

Da es außerhalb des Rahmens der Erfindung liegt, von was für einer Erregerschaltung der seismische Erreger 50' bzw. die Erregeranordnung 50 gespeist wird und von was für einer Messkanalschaltung die von den Geschwindigkeits- oder Wegsensoren 71, 72 abgegebenen Spannungen zu einem Massedurchfluß- und Dichtesignal verarbeitet werden, wird auf die Erreger- und die Messkanalschaltung hier nicht näher eingegangen. Es können die seit langem dafür üblichen und dem Fachmann geläufigen Schaltungen benutzt werden.

## Patentansprüche

**1.** Coriolis-Massedurchfluß/Dichteaufnehmer (10), der in eine von einem Fluid mindestens temporär durchströmte, eine Rohrleitungsachse aufweisende Rohrleitung einzusetzen ist, mit einem einzigen in einer Ebene V-förmig bezüglich einer Symmetrielinie (I-I) gebogenen Meßrohr (1), das aufweist:

- ein gerades Einlaßstück (11) mit einer in der Ebene liegenden Einlaßachse,
- ein gerades Auslaßstück (12) mit einer in der Ebene liegenden und mit der Einlaßachse fluchtenden Auslaßachse,
- einen Einlaßbogen (13),
- einen Auslaßbogen (14),
- einen Scheitelbogen (15), wobei
- das Einlaßstück nahtlos mit dem Einlaßbogen und das Auslaßstück nahtlos mit dem Auslaßbogen verbunden ist,
- ein gerades, den Einlaßbogen mit dem Scheitelbogen nahtlos verbindendes erstes Rohrstück (16) und
- ein gerades, den Auslaßbogen mit dem Scheitelbogen nahtlos verbindendes zweites Rohrstück (17),

  -- auf welches erste Rohrstück in der Nähe des Einlaßbogens zu einer ersten Begrenzung einer einen Rohrabschnitt des Meßrohrs bildenden Meßstrecke ein erster und ein zweiter Klemmkörper (22) einander gegenüberliegend aufgespannt sind,
  -- auf welches zweite Rohrstück in der Nähe des Auslaßbogens zu einer zweiten Begrenzung der Meßstrecke ein dritter und ein vierter Klemmkörper (23, 24) einander gegenüberliegend aufgespannt sind,
  -- wobei jeder Klemmkörper eine am Meßrohr anliegende Innenfläche und eine von dieser und dem Meßrohr abgewandte Außenfläche hat,

--- an welchen Außenflächen des ersten und des dritten Klemmkörpers ein erster Flachkörper (31) und
--- an welchen Außenflächen des zweiten und des vierten Klemmkörpers ein zweiter Flachkörper (32) befestigt ist,

  ---- welche beiden Flachkörper unter Zwischenlage eines ersten Abstandssteges (33) an einer ersten Längsseite und unter Zwischenlage eines zweiten Abstandssteges (34) an einer zweiten Längsseite miteinander und mit den Klemmkörpern verschraubt sind,
  ---- an welchen beiden Flachkörpern ein Gegenschwingkörper (41) fixiert ist, der sich entlang der Symmetrielinie bis zum Scheitelbogen erstreckt und dort einen ersten Teil (51) einer eine Hauptachse (53) aufweisenden Erregeranordnung (50) trägt, von der ein zweiter Teil (52) am Scheitelbogen fixiert ist,
  ---- welche Erregeranordnung den Rohrabschnitt zu Schwingungen eines dritten Schwingungsmodus mit einer zugehörigen Eigenfrequenz $f_3$ erregt,
  ---- auf welchem ersten Flachkörper (31) ein einlaßseitiger erster Sensorträger (61), von dem eine Längsachse parallel zum ersten Rohrstück (16) verläuft, und ein auslaßseitiger zweiter Sensorträger (62) fixiert ist, von dem eine Längsachse parallel zum zweiten Rohrstück (17) verläuft, und
  ---- auf welchem zweiten Flachkörper (32) ein einlaßseitiger erster Fixierträger, von dem eine Längsachse parallel zum ersten Sensorträger (61) verläuft, und ein auslaßseitiger zweiter Fixierträger (64) befestigt ist, von dem eine Längsachse parallel zum zweiten Sensorträger (62) verläuft,

-- an welchem ersten Rohrstück und an welchem ersten Sensorträger ein erster Geschwindigkeits- oder Wegsensor (71) sowie an welchem zweiten Rohrstück und an welchem zweiten Sensorträger ein zweiter Geschwindigkeits- oder Wegsensor (72) jeweils dort fixiert ist, wo bei Erregung im dritten Schwingungsmodus eine infolge einer aus der Rohrleitung stammenden Störung auftretende Verbiegung des Rohrabschnitts eine erste bzw. eine zweite Nullstelle hat, und

-- welches Einlaßstück und welches Auslaßstück von einem Tragrahmen (35) gehaltert sind,

--- an dem ein Gehäuse (8) fixiert ist, das am jeweiligen Fixierträger mittels eines ersten bzw. eines zweiten, dem ersten bzw. dem zweiten Geschwindigkeits- oder Wegsensor gegenüber liegenden Abstandhalters (92) fixiert ist.

2. Coriolis-Massedurchfluß/Dichteaufnehmer (10'), der in eine von einem Fluid mindestens temporär durchströmte, eine Rohrleitungsachse aufweisende Rohrleitung einzusetzen ist, mit einem einzigen in einer Ebene V-förmig bezüglich einer Symmetrielinie (II-II) gebogenen Meßrohr (1'), das aufweist:

- ein gerades Einlaßstück (11') mit einer in der Ebene liegenden Einlaßachse,
- ein gerades Auslaßstück (12') mit einer in der Ebene liegenden und mit der Einlaßachse fluchtenden Auslaßachse,
- einen Einlaßbogen,
- einen Auslaßbogen,
- einen Scheitelbogen (15'), wobei
- das Einlaßstück nahtlos mit dem Einlaßbogen und das Auslaßstück nahtlos mit dem Auslaßbogen verbunden ist,
- ein gerades, den Einlaßbogen mit dem Scheitelbogen nahtlos verbindendes erstes Rohrstück und
- ein gerades, den Auslaßbogen mit dem Scheitelbogen nahtlos verbindendes zweites Rohrstück,

-- auf welches erste Rohrstück in der Nähe des Einlaßbogens zu einer ersten Begrenzung einer einen Rohrabschnitt des Meßrohrs bildenden Meßstrecke ein erster und ein zweiter Klemmkörper einander gegenüberliegend aufgespannt sind,

-- auf welches zweite Rohrstück in der Nähe des Auslaßbogens zu einer zweiten Begrenzung der Meßstrecke ein dritter und ein vierter Klemmkörper einander gegenüberliegend aufgespannt sind,

-- wobei jeder Klemmkörper eine am Meßrohr anliegende Innenfläche und eine von dieser und dem Meßrohr abgewandte Außenfläche hat,

--- an welchen Außenflächen des ersten und des dritten Klemmkörpers ein erster Flachkörper (31') und

--- an welchen Außenflächen des zweiten und des vierten Klemmkörpers ein zweiter Flachkörper (32') befestigt ist,

---- welche beiden Flachkörper (31', 32') unter Zwischenlage eines ersten Abstandssteges an einer ersten Längsseite und unter Zwischenlage eines zweiten Abstandssteges an einer zweiten Längsseite miteinander und mit den Klemmkörpern verschraubt sind,

---- an welchen beiden Flachkörpern (31', 32') ein Gegenschwingkörper (41') fixiert ist, der sich entlang der Symmetrielinie (II-II) bis zum Scheitelbogen (15') erstreckt und davor endet,

---- auf welchem ersten Flachkörper (31') ein einlaßseitiger erster Sensorträger, von dem eine Längsachse parallel zum ersten Rohrstück verläuft, und ein auslaßseitiger zweiter Sensorträger fixiert ist, von dem eine Längsachse parallel zum zweiten Rohrstück verläuft, und

---- auf welchem zweiten Flachkörper (32') ein einlaßseitiger erster Fixierträger, von dem eine Längsachse parallel zum ersten Sensorträger verläuft, und ein auslaßseitiger zweiter Fixierträger befestigt ist, von dem eine Längsachse parallel zum zweiten Sensorträger verläuft,

-- an welchem Scheitelbogen (15') ein seismischer Erreger (50') fixiert ist,

--- der den Rohrabschnitt zu Schwingungen eines dritten Schwingungsmodus mit einer zugehörigen Eigenfrequenz $f_3$ erregt,

-- an welchem ersten Rohrstück und an welchem ersten Sensorträger ein erster Geschwindigkeits- oder Wegsensor sowie an welchem zweiten Rohrstück und an welchem zweiten Sensorträger ein zweiter Geschwindigkeits- oder Wegsensor jeweils dort fixiert ist, wo bei Erregung im dritten Schwingungsmodus eine infolge einer aus der Rohrleitung stammenden Störung auftretende Verbiegung des Rohrabschnitts eine erste bzw. eine zweite Nullstelle hat, und

-- welches Einlaßstück und welches Auslaßstück in einem Tragrahmen gehalten sind,

   --- an dem ein Gehäuse (8') fixiert ist, das am jeweiligen Fixierträger mittels eines ersten bzw. eines zweiten, dem ersten bzw. dem zweiten Geschwindigkeits- oder Wegsensor gegenüber liegenden Abstandhalters fixiert ist.

**3.** Coriolis-Massedurchfluß/Dichteaufnehmer nach Anspruch 1 oder 2, bei dem auf dem ersten Rohrstück (16) in der Nähe des Scheitelbogens (15) und etwa dort, wo ein Schwingungsknoten des dritten Schwingungsmodus auftritt, eine erste Zusatzmasse (161) und symmetrisch zur Symmetrielinie (I-I) auf dem zweiten Rohrstück (17) eine zweite Zusatzmasse (171) fixiert ist.

**4.** Coriolis-Massedurchfluß/Dichteaufnehmer nach Anspruch 1 oder 3, bei dem die Erregeranordnung (50) am Scheitelbogen (15) und am Gegenschwingkörper (41) so fixiert ist, dass eine Hauptachse (53) der Erregeranordnung in Richtung eines Durchmessers des Scheitelbogens verläuft.

**5.** Coriolis-Massedurchfluß/Dichteaufnehmer nach Anspruch 1 oder 3, bei dem die Erregeranordnung am Scheitelbogen und am Gegenschwingkörper so fixiert ist, dass eine Hauptachse der Erregeranordnung parallel zu einem Durchmesser des Scheitelbogens verläuft und zwischen diesem und dem Gehäuse liegt.

**6.** Coriolis-Massedurchfluß/Dichteaufnehmer nach einem der Ansprüche 1 bis 5, bei dem auf dem Gegenschwingkörper (41) in der Nähe der Flachkörper (31, 32) ein Kompensationskörper (411) fixiert ist, von dem eine Längsachse senkrecht zur Symmetrielinie (I-I) verläuft und der der dynamischen Ausbalancierung eines zum dritten Schwingungsmodus gehörenden Coriolismodus dient.

**7.** Coriolis-Massedurchfluß/Dichteaufnehmer nach einem der Ansprüche 1 bis 6, bei dem die beiden Flachkörper (31, 32) und der erste Abstandssteg (33) entlang der Symmetrielinie (I-I) mit einer ersten Ausnehmung (36) und die beiden Flachkörper, der zweite Abstandssteg (34) und der Gegenschwingkörper (41) entlang der Symmetrielinie mit einer zweiten Ausnehmung (37) unter Stehenlassen eines jeweiligen Torsionsstücks (38) versehen sind.

**8.** Coriolis-Massedurchfluß/Dichteaufnehmer nach Anspruch 7, bei dem die Torsionsstücke (38) als gemeinsames Drehgelenk ausgebildet sind.

**9.** Coriolis-Massedurchfluß/Dichteaufnehmer nach einem der Ansprüche 1 bis 8, bei dem der erste, der zweite, der dritte und der vierte Klemmkörper die gleiche Masse haben.

**10.** Coriolis-Massedurchfluß/Dichteaufnehmer nach einem der Ansprüche 1 bis 9, bei dem das Gehäuse (8. 8') aus ebenen Blechen zusammengesetzt ist und umfaßt:

- ein Vorderblech (81) mit einer ersten Mittelebene,
- ein Hinterblech (82) mit einer zweiten Mittelebene,
- ein Scheitelblech (83) mit einer dritten Mittelebene,
- ein erstes Seitenblech (84) mit einer vierten Mittelebene und
- ein zweites Seitenblech (85) mit einer fünften Mittelebene, wobei

   -- die erste Mittelebene parallel zum ersten Rohrstück (16) liegt,

   -- die zweite Mittelebene parallel zum zweiten Rohrstück (17) liegt,

   -- die dritte Mittelebene senkrecht zur Ebene ist,

   -- die vierte und die fünfte Mittelebene parallel zu den Flachkörpern (31, 32) liegen und

   -- das Hinterblech (82) über die Abstandshalter (92) an den Fixierträgern (64) befestigt ist.

## Claims

**1.** A Coriolis mass-flow/density transducer (10), which is for use in a pipe system exhibiting a pipe-system axis, through which system a fluid flows at least temporarily, having a single measuring tube (1) bent in a plane V-shaped relative to a line of symmetry (I-I), which tube has:

- a straight inlet piece (11) with an inlet axis lying in the plane,
- a straight outlet piece (12) with an outlet axis lying in the plane and aligned with the inlet axis,
- an inlet curve (13),
- an outlet curve (14),
- an apical curve (15), wherein
- the inlet piece is seamlessly connected to the inlet curve and the outlet piece is seamlessly connected to the outlet curve,
- a straight first tube piece (16) connecting the inlet curve seamlessly to the apical curve, and
- a straight second tube piece (17) connecting the outlet curve seamlessly to the apical curve,

   -- on to which first tube piece in the vicinity of the inlet curve to a first boundary of a measuring length forming a tube portion of the measuring tube, a first and a second clamping member (22) are clamped opposite one another,

-- on to which second tube piece in the vicinity of the outlet curve to a second boundary of the measuring length, a third and a fourth clamping member (23, 24) are clamped opposite one another,

-- each clamping member having an inner surface in contact with the measuring tube and an outer surface facing away from the inner surface and from the measuring tube,

--- on which outer surfaces of the first and third clamping member a first flat member (31) and

--- on which outer surfaces of the second and fourth clamping member a second flat member (32) is attached,

---- which two flat members are screwed together and to the clamping members with interposition of a first spacing member (33) on a first longitudinal side and with interposition of a second spacing member (34) on a second longitudinal side,

---- on which two flat members a counter-vibration member (41) is fixed, which extends along the line of symmetry as far as the apical curve and there bears a first part (51) of an excitation arrangement (50) exhibiting a main axis (53), a second part (52) of which excitation arrangement is fixed on the apical curve,

---- which excitation arrangement excites the tube portion to vibrations of a third vibration mode with an associated natural frequency $f_3$,

---- on which first flat member (31) is fixed an inlet-side first sensor support (61), a longitudinal axis of which follows a course parallel to the first tube piece (16), and an outlet-side second sensor support (62), a longitudinal axis of which follows a course parallel to the second tube piece (17), and

---- on which second flat member (32) is attached an inlet-side first fixing support, a longitudinal axis of which follows a course parallel to the first sensor support (61), and an outlet-side second fixing support (64), a longitudinal axis of which follows a course parallel to the second sensor support (62),

-- on which first tube piece and on which first sensor support a first speed or path sensor (71) and on which second tube piece and on which second sensor support a second speed or path sensor (72) is in each case fixed in the position where, in association with excitation in the third vibration mode, a bending of the tube portion occurring as a result of a disturbance arising from the pipe system has a first and a second zero position respectively, and

-- which inlet piece and which outlet piece are mounted by a supporting frame (35),

--- on which a housing (8) is fixed, which is fixed on the respective fixing support with the use of a first or a second spacer (92) positioned opposite the first or the second speed sensor or path sensor respectively.

2. A Coriolis mass-flow/density transducer (10'), which is for use in a pipe system exhibiting a pipe-system axis, through which system a fluid flows at least temporarily, having a single measuring tube (1') bent in a plane V-shaped relative to a line of symmetry (II-II), which tube has:

- a straight inlet piece (11') with an inlet axis lying in the plane,
- a straight outlet piece (12') with an outlet axis lying in the plane and aligned with the inlet axis,
- an inlet curve,
- an outlet curve,
- an apical curve (15'), wherein
- the inlet piece is seamlessly connected to the inlet curve and the outlet piece is seamlessly connected to the outlet curve,
- a straight first tube piece connecting the inlet curve seamlessly to the apical curve, and
- a straight second tube piece connecting the outlet curve seamlessly to the apical curve,

-- on to which first tube piece in the vicinity of the inlet curve to a first boundary of a measuring length forming a tube portion of the measuring tube, a first and a second clamping member are clamped opposite one another,

-- on to which second tube piece in the vicinity of the outlet curve to a second boundary of the measuring length, a third and a fourth clamping member are clamped opposite one another,

-- each clamping member having an inner surface in contact with the measuring tube and an outer surface facing away from the inner surface and from the measuring tube,

--- on which outer surfaces of the first and third clamping member a first flat member (31') and

--- on which outer surfaces of the second and fourth clamping member a second flat member (32') is attached,

---- which two flat members (31', 32') are screwed together and to the clamping members with interposition of a first spacing member on a first longitudinal side and with interposition of a second spacing member on a second longitudinal side,

---- on which two flat members (31', 32') a counter-vibration member (41') is fixed, which extends along the line of symmetry (II-II) as far as the apical curve (15') and ends before it,

---- on which first flat member (31') is fixed an inlet-side first sensor support, a longitudinal axis of which follows a course parallel to the first tube piece, and an outlet-side second sensor support, a longitudinal axis of which follows a course parallel to the second tube piece, and

---- on which second flat member (32') is attached an inlet-side first fixing support, a longitudinal axis of which follows a course parallel to the first sensor support, and an outlet-side second fixing support, a longitudinal axis of which follows a course parallel to the second sensor support,

-- on which apical curve (15') a seismic exciter (50') is fixed,

--- which excites the tube portion to vibrations of a third vibration mode with an associated natural frequency $f_3$,

-- on which first tube piece and on which first sensor support a first speed or path sensor and on which second tube piece and on which second sensor support a second speed or path sensor is in each case fixed in the position where, in association with excitation in the third vibration mode, a bending of the tube portion occurring as a result of a disturbance arising from the pipe system has a first and a second zero position respectively, and

-- which inlet piece and which outlet piece are mounted in a supporting frame,

--- on which a housing (8') is fixed, which is fixed on the respective fixing support with the use of a first or a second spacer positioned opposite the first or the second speed or path sensor respectively.

3. A Coriolis mass-flow/density transducer according to Claim 1 or 2, in which a first weight (161) is fixed on the first tube piece (16) in the vicinity of the apical curve (15), roughly in the position where a vibration node of the third vibration mode occurs, and a second weight (171) is fixed on the second tube piece (17) symmetrically to the line of symmetry (I-I).

4. A Coriolis mass-flow/density transducer according to Claim 1 or 3, in which the excitation arrangement (50) is fixed on the apical curve (15) and on the counter-vibration member (41) in such a way that a main axis (53) of the excitation arrangement follows a course in the direction of a diameter of the apical curve.

5. A Coriolis mass-flow/density transducer according to Claim 1 or 3, in which the excitation arrangement is fixed on the apical curve and on the counter-vibration member in such a way that a main axis of the excitation arrangement follows a course parallel to a diameter of the apical curve and is positioned between it and the housing.

6. A Coriolis mass-flow/density transducer according to one of Claims 1 to 5, in which a compensating member (411) is fixed on the counter-vibration member (41) in the vicinity of the flat bodies (31, 32), a longitudinal axis of which follows a course perpendicular to the line of symmetry (I-I), and which serves for the dynamic balancing of a Coriolis mode belonging to the third vibration mode.

7. A Coriolis mass-flow/density transducer according to one of Claims 1 to 6, in which the two flat bodies (31, 32) and the first spacing member (33) are provided with a first recess (36) along the line of symmetry (I-I), and the two flat bodies, the second spacing member (34) and the counter-vibration member (41) are provided with a second recess (37) along the line of symmetry, leaving a respective torsional piece (38).

8. A Coriolis mass-flow/density transducer according to Claim 7, in which the torsional pieces (38) are formed as a common swivel joint.

9. A Coriolis mass-flow/density transducer according to one of Claims 1 to 8, in which the first, the second, the third and the fourth clamping members have the same mass.

10. A Coriolis mass-flow/density transducer according to one of Claims 1 to 9, in which the housing (8, 8') is constructed of flat plates and comprises:

  - an anterior plate (81) with a first mid-plane,
  - a posterior plate (82) with a second mid-plane,
  - an apical plate (83) with a third mid-plane,
  - a first side plate (84) with a fourth mid-plane,
  - a second side plate (85) with a fifth mid-plane, wherein

    -- the first mid-plane is parallel to the first tube piece (16),
    -- the second mid-plane is parallel to the second tube piece (17),
    -- the third mid-plane is perpendicular to the plane,
    -- the fourth and the fifth mid-planes are parallel to the flat bodies (31, 32), and
    -- the posterior plate (82) is attached to the fixing supports (64) via the spacers (92).

**Revendications**

1. Détecteur de densité/de débit massique selon le principe de Coriolis (10), pouvant être installé dans une conduite présentant un axe de conduite et traversée au moins temporairement par un fluide, avec un seul tube de mesure (1) recourbé en forme de V sur un plan par rapport à une ligne de symétrie (I-I), qui comporte :

  - une pièce d'entrée (11) rectiligne avec un axe d'entrée situé sur le plan,
  - une pièce de sortie (12) rectiligne avec un axe de sortie situé sur le plan et s'alignant sur l'axe d'entrée,
  - un coude d'entrée (13),
  - un coude de sortie (14),
  - un coude de sommet (15), moyennant quoi
  - la pièce d'entrée est reliée sans soudure au coude d'entrée et la pièce de sortie sans soudure au coude de sortie,
  - un premier tube (16) rectiligne reliant sans soudure le coude d'entrée au coude de sommet et

  - un second tube (17) rectiligne reliant sans soudure le coude de sortie au coude de sommet,

    -- sur ledit premier tube à proximité du coude d'entrée à une première limite d'une distance de mesure formant un tronçon de tube du tube de mesure une première pièce de serrage et une seconde pièce de serrage (22) sont montées l'une en face de l'autre.
    -- sur ledit second tube à proximité du coude de sortie à une seconde limite de la distance de mesure une troisième et une quatrième pièce de serrage (23, 24) sont montées l'une en face de l'autre,
    -- moyennant quoi chaque pièce de serrage a une surface interne en appui contre le tube de mesure et une surface externe opposée à la surface interne et au tube de mesure.

      --- sur lesdites surfaces externes de la première pièce et de la troisième pièce de serrage est fixée une première pièce plate (31) et
      --- sur lesdites surfaces externes de la deuxième et de la quatrième pièce de serrage est fixée une deuxième pièce plate (32),

        ---- lesdites deux pièces plates sont vissées l'une avec l'autre par une première entretoise d'écartement (33) formant une plaque intermédiaire à une première longueur et par une deuxième entretoise d'écartement (34) formant une plaque intermédiaire à une deuxième longueur et avec les pièces de serrage,

      --- sur lesdites deux pièces plates est fixée une contre-pièce oscillante (41) qui s'étend le long de la ligne de symétrie jusqu'au coude de sommet et supporte à cet endroit une première pièce (51) d'une disposition d'excitation (50) présentant un axe principal (53), disposition d'excitation dont une deuxième pièce (52) est fixée au coude de sommet,

        ---- ladite disposition d'excitation excite le tronçon de tube à effectuer des oscillations d'un troisième mode d'oscillations avec une fréquence propre intrinsèque $f_3$,
        ---- sur ladite première pièce plate (31) est fixé un premier support de capteur (61), côté entrée, à partir duquel un axe longitudinal passe parallèlement au premier tube (16) et un deuxième support de capteur (62), côté sortie, à partir duquel un axe longitudinal passe parallèlement au deuxième tube (17), et

---- sur ladite deuxième pièce plate (32) est fixé un premier support de fixation, côté entrée, à partir duquel un axe longitudinal passe parallèlement au premier support de capteur (61) et un deuxième support de fixation (64), côté sortie, à partir duquel un axe longitudinal passe parallèlement au deuxième support de capteur (62),

--- au premier tube et au premier support de capteur est fixé respectivement un premier capteur de vitesse ou de route (71) ainsi qu'est fixé au deuxième tube et au deuxième support de capteur un deuxième capteur de vitesse ou de route (72), où en troisième mode d'oscillations une déformation du tronçon de tube intervenant à la suite d'un dérangement venant de la conduite a un premier ou un deuxième zéro, et

--- ladite pièce d'entrée et ladite pièce de sortie sont supportées par un cadre de support (35),

--- auquel est fixé un boîtier (8) qui est fixé à chaque support de fixation au moyen d'un premier ou d'un deuxième support d'écartement (92) situé en face du premier ou du deuxième capteur de vitesse ou de route.

2. Détecteur de densité/de débit massique selon le principe de Coriolis (10'), pouvant être installé dans une conduite présentant un axe de conduite et traversée au moins temporairement par un fluide, avec un seul tube de mesure (1') recourbé en forme de V sur un plan par rapport à une ligne de symétrie (II-II), qui comporte :

- une pièce d'entrée (11') rectiligne avec un axe d'entrée situé sur le plan,
- une pièce de sortie (12') rectiligne avec un axe de sortie situé sur le plan et s'alignant sur l'axe d'entrée,
- un coude d'entrée,
- un coude de sortie,
- un coude de sommet (15'), moyennant quoi

- la pièce d'entrée est reliée sans soudure au coude d'entrée et la pièce de sortie sans soudure au coude de sortie,
- un premier tube rectiligne reliant sans soudure le coude d'entrée au coude de sommet et
- un second tube rectiligne reliant sans soudure le coude de sortie au coude de sommet,

-- sur le premier tube à proximité du coude d'entrée à une première limite d'une distance de mesure formant un tronçon de tube du tube de mesure une première pièce de serrage et une seconde pièce de serrage sont montées l'une en face de l'autre.

-- sur le second tube à proximité du coude de sortie à une seconde limite de la distance de mesure une troisième et une quatrième pièce de serrage sont montées l'une en face de l'autre,

-- moyennant quoi chaque pièce de serrage a une surface interne en appui contre le tube de mesure et une surface externe opposée à la surface interne et au tube de mesure,

--- sur lesdites surfaces externes de la première pièce et de la troisième pièce de serrage est fixée une première pièce plate (31') et

--- sur lesdites surfaces externes de la deuxième et de la quatrième pièce de serrage est fixée une deuxième pièce plate (32'),

---- lesdites deux pièces plates (31', 32') sont vissées l'une avec l'autre par une première entretoise d'écartement formant une plaque intermédiaire à une première longueur et par une deuxième entretoise d'écartement formant une plaque intermédiaire à une deuxième longueur et avec les pièces de serrage,

---- sur lesdites deux pièces plates (31', 32') est fixée une contre-pièce oscillante (41') qui s'étend le long de la ligne de symétrie (II-II) jusqu'au coude de sommet (15') et se termine avant,

---- sur ladite première pièce plate (31') est fixé un premier support de capteur, côté entrée, à partir duquel un axe longitudinal passe parallèlement au premier tube et un deuxième support de capteur, côté sortie, à partir duquel un axe longitudinal passe parallèlement au deuxième tube, et

---- sur ladite deuxième pièce plate (32') est fixé un premier support de fixation, côté entrée, à partir duquel un axe longitudinal passe parallèlement au premier support de capteur et un deuxième support de fixation, côté sortie, à partir duquel un axe longitudinal passe parallèlement au deuxième support de capteur,

-- au coude de sommet (15') est fixé un excitateur sismique (50'),

--- qui excite le tronçon de tube à effectuer des oscillations d'un troisième mode d'oscillations avec une fréquence propre intrinsèque $f_3$,

-- au premier tube et au premier support de capteur est fixé respectivement un premier capteur de vitesse ou de route ainsi qu'est fixé au deuxième tube et au deuxième support de capteur un deuxième capteur de vitesse ou de route, où en troisième mode d'oscillations une déformation du tronçon de tube intervenant à la suite d'un dérangement venant de la conduite a un premier ou un deuxième zéro, et

-- ladite pièce d'entrée et ladite pièce de sortie sont supportées par un cadre de support,

--- auquel est fixé un boîtier (8') qui est fixé à chaque support de fixation au moyen d'un premier ou d'un deuxième support d'écartement situé en face du premier ou du deuxième capteur de vitesse ou de route.

3. Détecteur de densité/de débit massique selon le principe de Coriolis, selon la revendication 1 ou 2, dans lequel sur le premier tube (16) est fixé à proximité du coude de sommet (15) et à peu près là où un noeud d'oscillations du troisième mode d'oscillations intervient, est fixée une première masse supplémentaire (161) et sur le deuxième tube (17) une deuxième masse supplémentaire (171) de façon symétrique à la ligne de symétrie (I-I).

4. Détecteur de densité/de débit massique selon le principe de Coriolis, selon la revendication 1 ou 3, dans lequel la disposition d 'excitation (50) est fixée sur le coude de sommet (15) et sur la contre-pièce d'oscillations (41) de telle manière qu'un axe principal (53) de la disposition d'excitation passe en direction d'un diamètre du coude de sommet.

5. Détecteur de densité/de débit massique selon le principe de Coriolis, selon la revendication 1 ou 3, dans lequel la disposition d'excitation est fixée sur le coude de sommet et sur la contre-pièce d'oscillations de telle manière qu'un axe principal de la disposition d'excitation passe parallèlement à un diamètre du coude de sommet et se situe entre celui-ci et le boîtier.

6. Détecteur de densité/de débit massique selon le principe de Coriolis, selon l'une des revendications 1 à 5, dans lequel est fixé sur la contre-pièce d'oscillations (41) à proximité des pièces plates (31, 32) une pièce de compensation (411) à partir de laquelle un axe longitudimal passe à la verticale de la ligne de symétrie (I-I) et qui sert au balancement dynamique d'un mode selon le principe de Coriolis appartenant au troisième mode d'oscillations.

7. Détecteur de densité/de débit massique selon le principe de Coriolis, selon l'une des revendications 1 à 6, dans lequel les deux pièces plates (31, 32) et la première entretoise d'écartement (33) sont munies le long de la ligne de symétrie (I-I) d'un premier évidement (36) et les deux pièces plates, la deuxième entretoise d'écartement (34) et la contre-pièce d'oscillations (41) sont munies le long de la ligne de symétrie d'un deuxième évidement (37) avec la présence respective de pièce de torsion (38).

8. Détecteur de densité/de débit massique selon le principe de Coriolis, selon la revendication 7, dans lequel les pièces de torsion (38) sont conçues comme articulation pivotante commune.

9. Détecteur de densité/de débit massique selon le principe de Coriolis, selon l'une des revendications 1 à 8, dans lequel la première, la deuxième, la troisième et la quatrième pièce de serrage ont la même masse.

10. Détecteur de densité/de débit massique selon le principe de Coriolis, selon l'une des revendications 1 à 9, dans lequel le boîtier (8, 8') est assemblé à partir de tôles planes et comprend :

- une tôle avant (81) avec un premier plan médian,

- une tôle arrière (82) avec un deuxième plan médian,

- une tôle de sommet (83) avec un troisième plan médian,

- une première tôle latérale (84) avec un quatrième plan médian et

- une deuxième tôle latérale (85) avec un cinquième plan médian, moyennant quoi

- le premier plan médian est situé parallèlement au premier tube (16),

-- le deuxième plan médian est situé parallèlement au deuxième tube (17),

-- le troisième plan médian est à la verticale par rapport au plan,

-- le quatrième plan et le cinquième plan médian sont situés parallèlement aux pièces plates (31, 32) et

-- la tôle arrière (82) est fixée par delà les supports d'écartement (92) aux supports de fixation (64).

Fig.2

Fig.1

EP 1 130 367 B1

Fig.3

Fig.5

Fig.4

Fig.6